# EUROPÄISCHE PATENTSCHRIFT

(11) **EP 1 764 183 B1**
(45) Veröffentlichungstag und Bekanntmachung des Hinweises auf die Patenterteilung: **01.04.2009**
(21) Anmeldenummer: 06026119.5
(22) Anmeldetag: 13.04.2005
(51) Int. Cl.: B23Q 1/58, B23Q 1/34, B23Q 5/027

(54) **Vorrichtung und Verfahren zur Erzeugung von Mikrostrukturen**
An apparatus and method for the production of micro structures
Dispositif et méthode pour la production de micro-structures

(30) Priorität: 23.04.2004 DE 102004020990; 28.07.2004 DE 202004011815 U
(43) Veröffentlichungstag der Anmeldung: 21.03.2007
(62) Teilanmeldung aus: 05732039.2
(73) Patentinhaber: Schott AG, 55122 Mainz (DE)
(72) Erfinder: Ostendarp, Heinrich, 31073 Grünenplan (DE)
(74) Vertreter: Gahlert, Stefan

(56) Entgegenhaltungen:
- EP-A- 0 439 425
- DE-A1- 10 126 039
- US-A- 5 467 675

## Beschreibung

Die Erfindung betrifft eine Vorrichtung zur Erzeugung von Mikrostrukturen gemäß dem Oberbegriff von Anspruch 1 und einen Aktor zur Bewegung eines Werkzeugs an einer Drehmaschine gemäß dem Oberbegriff von Anspruch 10.

Eine Vorrichtung und ein Aktor sind aus der EP 0 439 425 B1 bekannt.

Die bekannte Vorrichtung und das bekannte Verfahren werden zum Herstellen von Kontaktlinsen durch ein Drehverfahren verwendet. Hiernach wird ein Rohling für eine zu bearbeitende Kontaktlinse an einer Spindel befestigt. Das von der Spindel rotierend angetriebene Werkstück kann mittels eines Drehwerkzeuges bearbeitet werden, das mittels eines piezoelektrischen Antriebs positioniert wird. Die Drehmaschine besitzt einen säulenartigen Drehsupport, der um eine Schwenkachse schwenkbar gelagert ist. An dem Drehsupport ist eine Schlittenführung befestigt. An der Schlittenführung ist ein Werkzeugschlitten linear und in radialer Richtung zur Schwenkachse des Drehsupports bewegbar geführt. Am Werkzeugschlitten ist ein Werkzeughalter für ein Drehwerkzeug vorzugsweise in Form eines Drehdiamanten gelagert. Der Werkzeugschlitten kann zur Grobeinstellung des Drehwerkzeugs um die Schwenkachse des Drehsupports mit Hilfe eines Motorantriebs entlang der Schlittenführung bewegt werden. Zur Feinpositionierung des Drehwerkzeuges ist ein piezoelektrischer Antrieb vorgesehen, der aus zwei Piezotranslatoreinrichtungen bestehen kann. Während eine erste Piezotranslatoreinrichtung eine Bewegung in Richtung der Schlittenführung ermöglicht, ist eine zweite Piezotranslatoreinrichtung für eine dazu senkrechte Bewegung ausgebildet. Hierbei können die Stellbewegungen der Piezotranslatoreinrichtungen in Abhängigkeit vom Rotationswinkel der Spindel um die Spindelachse gesteuert werden.

Auf diese Weise ist eine hochpräzise Oberflächenbearbeitung von Linsen mittels eines Diamantdrehmeißels ermöglicht, wobei auch nicht rotationssymmetrische Oberflächen erzeugt werden können.

Ähnliche Vorrichtungen zur Erzeugung von nicht-rotationssymmetrischen Oberflächen durch eine Drehbearbeitung mit Hilfe eines piezoelektrischen Antriebs sind etwa aus der gattungsgebenden US 5 467 675 oder aus der GB 2 314 452 A bekannt. In der US 5467675 ist der Stößel mittels einer Stange, mit Gewinden an den Enden, vorgespannt.

Mit den bekannten Vorrichtungen können zwar Feinstruktur-Oberflächenbearbeitungen mit Hilfe von Diamantwerkzeugen durchgeführt werden, jedoch sind diese Vorrichtungen aufgrund unzureichender dynamischer Eigenschaften nicht geeignet, um sehr harte, metallische Werkstoffe präzise zu bearbeiten. Derartige Werkstoffe werden beispielsweise als Formenwerkstoffe für die Herstellung von Linsen durch Heißpressen benötigt. Es kann sich hierbei beispielsweise um Hartmetall-Werkstoffe handeln. In derartige Formen müssen beispielsweise zur Herstellung von Linsen für Beleuchtungszwecke, die in sogenannten Poly-Ellipsoid-Scheinwerfern (PES-Scheinwerfern) eingesetzt werden, ganz bestimmte Mikrostrukturen eingebracht werden, die bei der Formgebung durch Heißpressen auf die betreffenden Linsen übertragen werden. Diese Mikrostrukturen wirken bei den hergestellten Linsen als mikrooptische Komponenten, um eine bestimmte vorgegebene Lichtverteilungscharakteristik im Scheinwerfer einzuhalten.

Die Herstellung derartiger Formen, die etwa aus Hartmetall oder aus Grauguss bestehen können, ist in der beabsichtigten Form bislang nur mit geometrisch unbestimmten Verfahren möglich. Hierzu werden die betreffenden Formen zunächst in makroskopischer Form der betreffenden Linsen durch Drehen bearbeitet. Anschließend erfolgt ggf. ein Polieren der Formoberfläche. Die Bereiche der Form, die zur Erzeugung von Streuzentren auf den damit herzustellenden Linsen vorgesehen sind, werden anschließend beispielsweise durch eine Strahlbehandlung mit Korund in mehreren Arbeitsgängen erzeugt, wobei Abdeckblenden für diejenigen Bereiche verwendet werden, die nicht in dieser Weise mikrostrukturiert werden sollen. Nach der Strahlbearbeitung erfolgt zum Teil noch eine flächige Nachbehandlung. Zur Herstellung einer derartigen Form sind daher zahlreiche manuelle Arbeitsschritte notwendig, was eine sehr zeitaufwändige und teure Bearbeitung bedeutet, um die gewünschte Oberflächenstruktur zu erzeugen. Zudem beinhaltet eine derartige Arbeitsfolge eine Vielzahl von Fehlermöglichkeiten, die eine reproduzierbare Einstellung einer speziellen Lichtverteilung nachteilig beeinflussen.

Die eingangs erwähnten vorbekannten Vorrichtungen mit Piezoantrieben sind für eine derartige Formgebung nicht geeignet, da sie hierzu nicht die notwendige mechanische Stabilität und die erforderlichen dynamischen Eigenschaften aufweisen, um bei der Bearbeitung harter metallischer Werkstoffe mit den erforderlichen hohen Schnittgeschwindigkeiten präzise arbeiten zu können. Zwar könnte mit den bekannten Vorrichtungen ggf. lagegeregelt gearbeitet werden, jedoch ist dies naturgemäß nur mit einem ausreichenden Abstand bis zur ersten Resonanzfrequenz des jeweiligen Systems möglich, weshalb mit den bekannten Systemen ein Arbeiten bis maximal etwa 1.000 Hz ermöglicht ist. Die hiermit erreichbaren Schnittgeschwindigkeiten reichen jedoch nicht aus, um bei den vorstehend erwähnten Werkstoffen eine saubere Bearbeitung mit ausreichender Oberflächengüte zu erzielen, insbesondere wenn nicht-rotationssymmetrische Oberflächenstrukturen der vorstehend erwähnten Art hergestellt werden sollen.

Der Erfindung liegt somit die Aufgabe zugrunde, eine Vorrichtung zur Erzeugung von Mikrostrukturen zu schaffen, womit auch eine Bearbeitung von harten metallischen Werkstoffen, wie etwa Hartmetallen und Grauguss, mit hohen Schnittgeschwindigkeiten ermöglicht wird und gleichzeitig nicht-rotationssymmetrische Mikrostrukturen erreichbar sind. Hierbei soll insbesondere die Herstellung von Formen für die Herstellung von Linsen durch Heißpressen ermöglicht werden, die als Linsen für PES-Scheinwerfer geeignet sind und mit Mikrostreulinsenstrukturen versehen sind. Ferner soll ein Aktor angegeben werden, der für eine derartige Vorrichtung geeignet ist.

Diese Aufgabe wird erfindungsgemäß durch eine Vorrichtung gemäß Anspruch 1 und durch einen Aktor gemäß Anspruch 10 gelöst.

Die Aufgabe der Erfindung wird auf diese Weise vollkommen gelöst.

Erfindungsgemäß ist der Stößel durch einen Fluiddruck gegen den schnellen Antrieb vorgespannt. Hierdurch wird die Auswirkung des Schnittkraftrauschens reduziert.

Bei dem schnellen Antrieb handelt es sich vorzugsweise um einen Piezoantrieb.

Daneben sind auch andere Ausführungsform für den schnellen Antrieb denkbar, wie etwa ein hydraulischer Antrieb. Unter einem schnellen Antrieb im Sinne dieser Anmeldung wird ein Antrieb verstanden, der eine schnelle gesteuerte Bewegung in Axialrichtung ausführen kann, in einer dazu senkrechten Ebene jedoch keine gesteuerte Bewegung ausführen kann und nur sehr geringe Kräfte aufnehmen kann. Unter "schnell" ist in diesem Zusammenhang zu verstehen, das der Antrieb bei Ansteuerung mit einem geeigneten Steuersignal eine Bewegung mit einer Frequenz von mindestens 500 Hz oder mehr ausführen kann.

In bevorzugter Weiterbildung der Erfindung weist die Führungseinrichtung in einer Ebene senkrecht zur Zustellrichtung der Führungseinrichtung eine statische Steifigkeit von mindestens 50 N/µm, vorzugsweise von mindestens 100 N/µm, auf.

Mit einer derartigen Vorrichtung können insbesondere Formen zum Heißpressen von Linsen für PES-Scheinwerfer hergestellt werden, die an ihrer Oberfläche mit Mikrolinsenstrukturen versehen sind bzw. "gefrostet" sind. Hiermit lassen sich bei der Bearbeitung von Grauguss oder Hartmetallen Schnittgeschwindigkeiten in der Größenordnung von 60 Meter pro Minute und mehr erzielen. Dies reicht aus, um eine saubere Bearbeitung der nicht-rotationssymmetrischen Oberflächen in einer annehmbaren Zeit zu gewährleisten. Es können hierbei konventionelle Schneidplatten-Einsätze verwendet werden.

In vorteilhafter Weiterbildung der Erfindung sind die Federelemente als Blattfedern ausgebildet, die an ihren beiden längsseitigen Enden an Haltern eingespannt sind und quer dazu beweglich sind.

In zweckmäßiger Weiterbildung dieser Ausführung bestehen hierbei die Federelemente aus Fühlerlehrenbändern, die miteinander gekreuzt in Radialrichtung zwischen dem Halter und dem Stößel eingespannt sind.

Alternativ hierzu ist eine Ausführung als radialsymmetrische Federelemente, etwa in Form von Tellerfedern, möglich, wobei der Stößel im Zentrum angekoppelt ist.

Durch einen derartigen Aufbau lässt sich eine ausreichende Nachgiebigkeit der Führungseinrichtung in der Bewegungsrichtung des schnellen Antriebes bei einer gleichzeitig hohen Steifigkeit in einer Ebene senkrecht dazu erzielen.

In vorteilhafter Weiterbildung dieser Ausführung ist der Stößel in einem Gehäuse gehalten, wobei der Stößel mit dem Gehäuse einen druckdicht abgeschlossenen Raum bildet, der mit einem Fluiddruck beaufschlagbar ist, wobei der Raum über eine erste mit dem Stößel verbundene Membran auf der Piezoseite und eine zweite mit dem Stößel verbundene Membran auf der Werkzeugseite in Axialrichtung nach außen hin abgedichtet ist, und wobei die erste Membran eine größere dem Fluiddruck ausgesetzte wirksame Fläche als die zweite Membran aufweist.

Die Membranen bestehen in vorteilhafter Weiterbildung dieser Ausführung aus Aluminium.

Auf diese Weise kann die Rückstellkraft für den Piezoantrieb auf einfache und zuverlässige Weise gewährleistet werden und gleichzeitig eine Auswirkung des Schnittkraftrauschens reduziert werden.

In vorteilhafter Weiterbildung dieser Ausführung weist das Gehäuse mindestens ein aus einem Sintermaterial, vorzugsweise einem Sintermetall, bestehendes Dämpfungselement auf. Das Dämpfungselement weist hierbei vorzugsweise einen Anteil einer offen Porosität auf.

Dabei kann ferner zwischen dem Dämpfungselement und der zugewandten Membran ein Spalt einer Dicke von vorzugsweise 0,1 bis 1 Millimeter gebildet sein, der mit einem Dämpfungsmittel, gefüllt ist. Hierbei kann es sich etwa um Luft, Fett oder Öl handeln.

Durch diese Maßnahmen können die Auswirkungen des Schnittkraftrauschens noch weiter reduziert werden.

Das zweite Ende des Piezoantriebs kann etwa über ein konvexes Element, insbesondere eine Kugel oder ein balliges Element, an einer zugeordneten Zentrierung des Stößels anliegen.

Auf diese Weise wird die Einbringung statischer und dynamischer Querkräfte in radialer Richtung, die etwa durch Ausrichtungsfehler zwischen dem Piezoantrieb und dem Stößel sowie durch Schnittkraftrauschen entstehen können, weitgehend ausgeschaltet.

Gemäß einer alternativen Ausführung der Erfindung ist der Piezoantrieb an seinem zweiten Ende durch eine Deckplatte abgeschlossen, die über eine Einschnürung mit dem Stößel gekoppelt ist.

Auf diese Weise lässt sich die Masse des Gesamtsystems noch weiter verringern und es kann gegebenenfalls eine Fügungsstelle eingespart werden, was vorteilhaft für die Dynamik des Gesamtsystems ist.

Gemäß einer weiteren Ausgestaltung der Erfindung erlaubt der Antrieb einen Vorschub in einer Richtung senkrecht zur Spindelachse, während der Aktor eine Bewegung des Werkzeugs in Richtung der Spindelachse erlaubt.

Bei dieser Ausführung erfolgt die Drehbearbeitung nach der Art des Plandrehens, während das Werkzeug mittels des Piezoantriebs weitgehend in Richtung der Spindelachse, also in z-Richtung, zugestellt wird.

Ein derartiger Aufbau ist beispielsweise zur Mikrostrukturierung von Formen für die Herstellung von Linsen für PES-Scheinwerfer geeignet.

Gemäß einer weiteren Ausführung der Erfindung erlaubt der Antrieb einen Vorschub in einer zur Spindelachse parallelen Richtung, während der Aktor eine Bewegung des Werkzeugs senkrecht dazu erlaubt.

Mit einer derartigen Anordnung kann eine Oberflächenbearbeitung des Werkstücks durch Mikrostrukturierung an der Außenoberfläche in Längsrichtung erfolgen. Hierbei wird also nach der Art des Längsdrehens gearbeitet, wobei der Aktor eine Zustellung des Werkzeugs in einer zur Spindelachse senkrecht stehenden Ebene erlaubt, also beispielsweise in x-Richtung.

Eine derartige Anordnung ist beispielsweise zur Mikrostrukturierung von tribologisch beanspruchten Flächen, wie etwa Lageroberflächen an ihrer Außenseite geeignet, um etwa die Fettaufnahme zu verbessern und so deutlich verbesserte Schmier- und Notlaufeigenschaften zu erzielen.

In zweckmäßiger Weiterbildung der Erfindung ist eine elektronische Steuerung zur Steuerung der Bewegung des Aktors vorgesehen, die die Bewegung des Aktors in Abhängigkeit von der Winkelposition des Werkstücks und der Lage des Aktors entlang der ersten Richtung relativ zum Werkstück steuert.

Auf diese Weise können nicht-rotationssymmetrische Oberflächenstrukturen mit Hilfe der piezogesteuerten Zustellbewegung des Werkzeugs erzielt werden.

Gemäß einer weiteren Ausgestaltung der Erfindung weist die Steuerung ein Mittel zur Transformation einer in kartesischen Koordinaten gegebenen zu erzeugenden Soll-Mikrostruktur des Werkstücks in eine koordinatentransformierte Struktur in Polarkoordinaten auf, in der die Stellwerte in Abhängigkeit von Polarkoordinaten gespeichert sind, die den Drehwinkel und den Radius enthalten.

Mit einer derartigen Koordinatentransformation kann der jeweilige Stellwert für den Aktor für den Fall des Plandrehens ermittelt werden.

Die koordinatentransformierte Struktur wird hierbei vorzugsweise in einer Look-Up-Tabelle (LUT) gespeichert, aus der die elektronische Steuerung ein Stellsignal ableitet, das einem Verstärker zur Ansteuerung des Aktors zugeführt wird.

In bevorzugter Weiterbildung dieser Ausführung weist die elektronische Steuerung Mittel zur Interpolation des dem Verstärker zugeführten Stellsignals in Abhängigkeit von Lageinkrementen des Linearvorschubes in der ersten Richtung auf.

Während in der Arbeitsrichtung des Piezoantriebs die Trägheit des mechanischen Systems eine Interpolation überflüssig macht und hierdurch automatisch eine gewisse Glättung erfolgt, ist eine Interpolation der dem Verstärker zugeführten Stellsignale in Abhängigkeit von Lageinkrementen des Linearvorschubes sinnvoll. So wird bei der Abbildung benachbarter Pixel der Mikrostruktur eine durch die lineare Stellbewegung in Radialrichtung verursachte Bildung von Riefen nach der Art von Drehriefen vermieden.

In weiterer vorteilhafter Ausgestaltung der Erfindung weist der Aktor eine erste Resonanzfrequenz von mindestens 1.500 Hz, vorzugsweise von mindestens 2.000 Hz, besonders bevorzugt von mindestens 3.000 Hz, auf, wobei die Steuereinrichtung dazu ausgebildet ist, dem Aktor ein tiefpassgefiltertes oder bandpassgefiltertes Signal zuzuführen, dessen obere Grenzfrequenz unterhalb der Resonanzfrequenz des Aktors liegt.

Mit dieser Ausführung wird es ermöglicht, ohne eine Lageregelung des Aktors mit einer hohen Schnittgeschwindigkeit zu arbeiten, die derart gewählt ist, dass die Grenzfrequenz der zu erzeugenden Soll-Mikrostruktur kurz unterhalb der Resonanzfrequenz des Aktors liegt. Auf diese Weise kann mit einem offenen System ohne Lageregelung mit maximaler Schnittgeschwindigkeit gearbeitet werden, bei der noch ein ausreichender Abstand zur Resonanzfrequenz des Aktors gewahrt ist.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Figur 1: eine erfindungsgemäße Vorrichtung in stark vereinfachter, schematischer Darstellung;
- Figur 2: einen Längsschnitt durch einen erfindungsgemäßen Aktor gemäß Figur 1;
- Figur 2a: einen Ausschnitt einer gegenüber Figur 2 abgewandelten Ausführung des erfindungsgemäßen Aktors im Bereich der Verbindung zwischen Aktor und Stößel;
- Figur 3: eine perspektivische Ansicht des Aktors gemäß Figur 2;
- Figur 4: den Frequenzgang und den Phasengang des Aktors mit Werkzeug gemäß der Figuren 2 und 3;
- Figur 5: eine Ausschnittsvergrößerung einer herzustellenden Soll-Mikrolinsenstruktur für die Formherstellung zur Herstellung einer Linse für einen PES-Scheinwerfer;
- Figur 6: eine Wiedergabe der Soll-Mikrostruktur gemäß Figur 5 als Pixelbild;
- Figur 7: eine Ortsfrequenzanalyse der Soll-Mikrostruktur gemäß Figur 6 entlang des Außenumfangs bei einem Radius von R = 34 mm;
- Figur 8: ein Prinzipschaltbild mit der Steuerung für den Aktor;
- Figur 9: eine schematische Darstellung des Algorithmus zur Ansteuerung des Aktors und
- Figur 10: einen Längsschnitt durch einen erfindungsgemäßen Aktor, der gegenüber der Ausführung gemäß Figur 2 leicht abgewandelt ist.

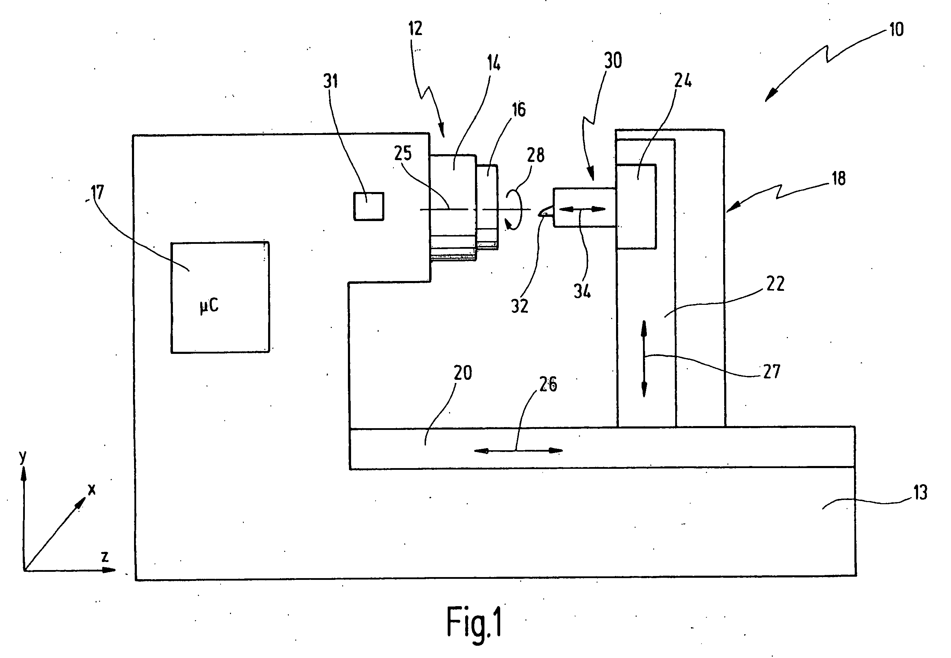

In Figur 1 ist eine erfindungsgemäße Vorrichtung äußerst schematisch dargestellt und insgesamt mit der Ziffer 10 bezeichnet.

Bei der erfindungsgemäßen Vorrichtung 10 handelt es sich um eine Drehmaschine, die zusätzlich mit einem Aktor 30 ausgestattet ist, um eine schnelle, piezogesteuerte Bewegung eines Werkzeugs 32 im Bezug auf ein Werkstück 16 zu ermöglichen. Die Vorrichtung 10 weist eine Spindel 12 auf, die um ihre Spindelachse 25 rotierend antreibbar ist, wie durch einen Pfeil 28 verdeutlicht ist. An der Spindel 12 ist eine Aufnahme 14 in Form eines Spannfutters zum Spannen eines Werkstücks 16 vorgesehen.

Auf einem Maschinenbett 13 der Vorrichtung 10 ist ein Antrieb 20 entlang einer sich in z-Richtung (parallel zur Spindelachse 25) erstreckenden Führung vorgesehen, mittels derer ein Werkzeugschlitten 18 in z-Richtung verfahren werden kann, wie durch den Doppelpfeil 26 angedeutet ist. Am Werkzeugschlitten 18 ist ein Antrieb 22 vorgesehen, mittels dessen ein Schlitten 24 in Vertikalrichtung (y-Richtung) verfahren werden kann, wie durch den Doppelpfeil 27 angedeutet ist. Am Schlitten 24 ist schließlich ein weiterer Antrieb vorgesehen, der ein Verfahren in Horizontalrichtung (x-Richtung quer zur Spindelachse 25) ermöglicht.

Am Schlitten 24 ist schließlich der Aktor 30 aufgenommen, mittels dessen das Werkzeug 32 zusätzlich in z-Richtung verfahrbar ist, wie durch den Doppelpfeil 34 angedeutet ist.

Zur Steuerung der Drehmaschine und des Aktors ist eine zentrale Steuerung vorgesehen, die schematisch mit der Ziffer 17 angedeutet ist. Die Winkelstellung der Spindel 12 kann mittels eines Drehgebers 31 überwacht werden.

Die Vorrichtung 10 kann nun zur Mikrostrukturierung der Oberfläche eines Werkstücks 16 derart benutzt werden, dass das Werkstück 16 mittels der Spindel 12 um die Spindelachse 25 rotierend angetrieben wird, während der Aktor 30 mittels des Schlittens 24 in x-Richtung positioniert wird und das Werkzeug 32 mittels des Aktors 30 in Abhängigkeit von der über den Drehgeber 31 erfassten Winkelposition des Werkstückes 16 und von der Ortskoordinate des Aktors 30 in x-Richtung auf die Werkstückoberfläche zugestellt wird. Auf diese Weise kann eine Mikrostrukturierung der Werkstückoberfläche erreicht werden, wobei nicht-rotationssymmetrische Oberflächenstrukturen mit hoher Präzision erzeugt werden können.

Mit dem anhand von Figur 1 beschriebenen Aufbau lässt sich eine Bearbeitung von Werkstücken nach der Art des Plandrehens erreichen, das heißt das Werkstück wird rotierend angetrieben und das Werkzeug 32 wird quer zur Spindelachse vorwiegend in Horizontalrichtung (x-Richtung) bzw. radial zum Werkstück 16 bewegt, während die schnelle Zustellbewegung des Aktors 30 in z-Richtung, also in Richtung der Spindelachse 25, erfolgt. Zusätzlich sind natürlich Bewegungen in anderen Richtungen möglich, beispielsweise in z-Richtung zum Drehen von Konturen.

Es versteht sich, dass auch eine Werkstückbearbeitung nach der Art des Längsdrehens möglich ist. Hierzu erfolgt die Positionierbewegung für den Aktor 30 mittels des Antriebs 20 in z-Richtung, während der Aktor 30 eine Zustellbewegung in einer dazu senkrechten Ebene (x-/y-Ebene) ermöglicht. Zweckmäßigerweise ist hierzu der Aktor derart an dem Schlitten 24 positioniert, dass die Piezoachse in x-Richtung (oder ggf. in y-Richtung) ausgerichtet ist. Mit einer derartigen Anordnung könnte also eine Mikrostrukturierung eines Werkstücks an der Außenoberfläche (oder ggf. an der Innenoberfläche) nach der Art des Außenrunddrehens bzw. Innenrunddrehens durchgeführt werden.

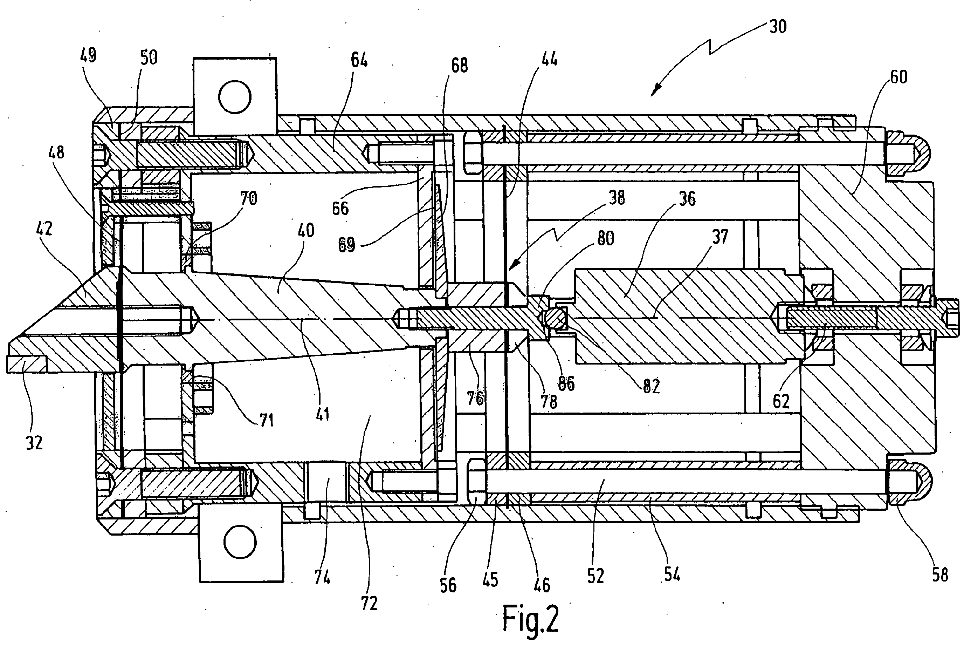

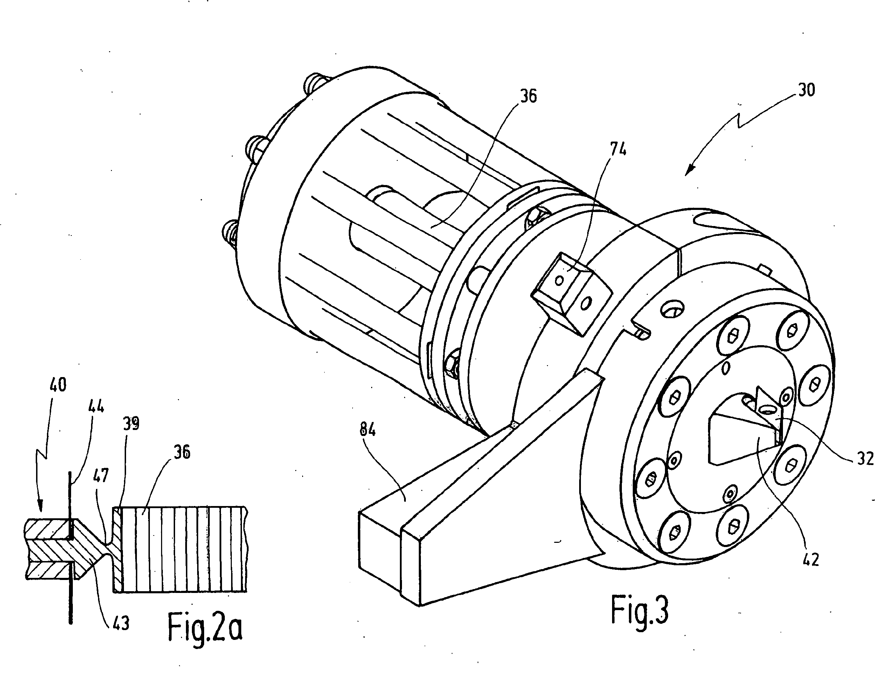

Der besondere Aufbau des Aktors, der gegen eine Rückstellkraft in Richtung der Piezoachse sehr schnell bewegbar ist, jedoch in einer zur Piezoachse senkrechten Ebene eine hohe Steifigkeit besitzt, wird im Folgenden anhand der Figuren 2 und 3 näher beschrieben.

Der in den Figuren 2 und 3 dargestellte insgesamt mit der Ziffer 30 bezeichnete Aktor besteht im Wesentlichen aus einem Piezoantrieb 36, der an einem Gehäuse aufgenommen ist und der über eine Führungseinrichtung 38 auf ein Werkzeug 32 wirkt. Der Piezoantrieb 36 ermöglicht lediglich eine Bewegung in Axialrichtung des Piezoantriebs, kann jedoch in einer Ebene senkrecht dazu keine Stellkräfte erzeugen. Mittels der Führungseinrichtung 38 wird nun gewährleistet, dass Stellbewegungen des Piezoantriebs 36 in seiner Axialrichtung unmittelbar auf das Werkzeug 32 übertragen werden können, dass der gesamte Aktor 30 jedoch in einer Ebene senkrecht zur Piezoachse eine hohe Steifigkeit aufweist.

Hierzu weist die Führungseinrichtung 38 einen Stößel 40 auf, dessen Stößelachse 41 möglichst genau mit der Längsachse 37 des Piezoantriebs 36 ausgerichtet ist. Der Stößel 40 ist gegen die Kraft von ersten Federelementen 44 und zweiten Federelementen 48 in Richtung seiner Stößelachse 41 in Axialrichtung bewegbar, ist jedoch durch die spezielle Ausgestaltung und Einspannung der Federelemente 44, 48 in einer Ebene senkrecht zur Stößelachse 41 praktisch unnachgiebig aufgehängt. Bei den Federelementen 44 bzw. 48 handelt es sich um Blattfedern aus breitem Federstahl geringer Stärke, wie er etwa als Fühlerlehrenband bekannt ist. Diese Blattfedern sind an ihren äußeren Enden an Haltern fest eingespannt, während der Stößel 40 in ihrer Mitte befestigt ist. Die ersten Federelemente 44 sind zwischen ringförmigen Haltern 45, 46 eingespannt, während die zweiten Federelemente 48 zwischen ringförmigen Haltern 49, 50 eingespannt sind.

Insgesamt ergibt sich auf diese Weise eine mögliche Axialauslenkung des Stößels in der Größenordnung von etwa 0,5 mm, während der Stößel 40 mit einer sehr hohen Steifigkeit in einer Ebene senkrecht dazu gehalten ist (statische Steifigkeit größer 100 N/µm). Die notwendige Rückstellkraft auf den Piezoantrieb 36 wird im dargestellten Fall nicht mechanisch sondern pneumatisch erzeugt. Hierzu ist der Stößel 40 innerhalb eines Gehäuses 64 derart aufgehängt, dass ein nach außen luftdicht abgeschlossener Hohlraum 72 erreicht wird, der über einen Druckluftanschluss 74 mit Druckluft beaufschlagt werden kann. Der Hohlraum 72 ist in Axialrichtung durch eine erste Membran 68 an seinem dem Piezoantrieb 36 zugewandten Ende und durch eine zweite Membran 70 am werkzeugseitigen Ende abgedichtet. Hierbei ist der nach außen (zur Umgebungsluft) hin wirksame Membrandurchmesser bei der ersten Membran 68, die dem Piezoantrieb 36 zugewandt ist, deutlich größer als der Membrandurchmesser 70 auf der gegenüberliegenden Seite. Somit ergibt sich eine Druckdifferenz, durch die der mit den beiden Membranen 68, 70 im Zentrum verbundene Stößel 40 in Richtung auf den Piezoantrieb 36 vorgespannt wird. Die Vorspannkraft, die naturgemäß größer als die vom Piezoantrieb 36 erzeugten Beschleunigungskräfte sein sollte, kann durch die Wahl der Flächenverhältnisse der Membranen 68, 70 und durch den angewendeten Druck eingestellt werden.

Die Membranen 68, 70 bestehen vorzugsweise aus relativ starren Aluminiumelementen und liegen an ihrem Außenumfang jeweils an einer dünnen Gegenmembran 69 bzw. 71 an, die sich durch den Überdruck im Hohlraum 72 gegen die Membran 68 bzw. 70 anpresst. Ferner ist am axialen Ende des Hohlraums 72, das dem Piezoantrieb zugewandt ist, mit einem sehr geringen Abstand zur Gegenmembran 69 eine sich weitgehend über den gesamten Querschnitt des Hohlraums 72 erstreckende Sintermetallplatte 66 gehalten. Die Sintermetallplatte 66 besteht etwa aus Sinterstahl und weist einen gewissen Anteil einer offenen Porosität auf.

Auf diese Weise ist die Sintermetallplatte 36 luftdurchlässig, um den im Hohlraum 72 herrschenden Innendruck auf die Membran 68 übertragen zu können, führt jedoch infolge der dünnen Kanäle, die durch die offene Porosität gebildet sind, zu einer merklichen Dämpfung, wodurch die Auswirkungen des Schnittkraftrauschens im Betrieb des Aktors deutlich reduziert werden können.

Das Werkzeug 32 selbst kann etwa als Schneidplatte ausgebildet sein, die an einem Werkzeughalter 42 befestigt ist, der (mittels einer nicht dargestellten Schraube) am äußeren axialen Ende des Stößels 40 befestigt ist, wobei gleichzeitig die Befestigung an den zweiten Federelementen 48 in Form der gekreuzten Blattfedern erfolgt. Das gegenüberliegende Ende des Stößels 40 ist mit den beiden ersten sich kreuzenden Federelementen 44 fest verbunden. Hierzu dient eine Schraube 80, die sich durch entsprechende zentrale Ausnehmungen der beiden sich kreuzenden Federelemente 44 hindurch unter Zwischenlage eines Abstandshalters 76 und eines Zwischenstückes 78 in das Ende des Stößels 40 hinein erstreckt und damit verschraubt ist.

Der Piezoantrieb 36 ist an seinem dem Stößel 40 abgewandten Ende über eine Piezoaufnahme 62 mit einem Endstück 60 starr verschraubt. An seinem dem Stößel 40 zugewandten Ende liegt der Piezoantrieb 36 über eine Kugel 82 über eine Zentrierung 86 an der Schraube 80 an. Auf diese Weise werden etwaige Radialkräfte auf den Piezoantrieb 36 vermieden, die aus einem Ausrichtungsfehler zwischen der Längsachse 37 des Piezoantrieb 36 und der Stößelachse 41 bedingt sein könnten. Somit ist gewährleistet, dass der Piezoantrieb 36 lediglich in Richtung seiner Längsachse 37 beansprucht wird.

Die aus dem Piezoantrieb 36 und seiner Aufhängung mit Endstück 60 gebildete Einheit ist über Gewindebolzen 52 unter Zwischenlage von Abstandshülsen 54 unmittelbar durch die Halter 45, 46 hindurch verschraubt.

Insgesamt ergibt sich auf diese Weise ein kompakter Aktor 30, bei dem der Piezoantrieb 36 gegen eine pneumatische Rückstellkraft in Axialrichtung bewegbar ist und in einer Ebene senkrecht dazu eine hohe Steifigkeit aufweist.

Auf die Beschreibung zusätzlicher Maßnahmen, wie etwa auf einen kompletten Spritzschutz zum Schutz des Piezoantriebs 36 gegen Schneidöl während der Drehbearbeitung, wird hier verzichtet, da diese dem Fachmann geläufig sind.

Eine Abwandlung der Verbindung zwischen Piezoantrieb 36 und Stößel 40 ist aus Figur 2a zu ersehen. Auch hierbei ist zwischen dem Piezoantrieb 36 und dem Stößel 40 ein Ausgleichselement 43 vorgesehen, das Ausrichtungsfehler zwischen der Längsachse 37 des Piezoantriebs 36 und der Stößelachse 41 kompensiert. Hierbei ist jedoch das Ausgleichselement 43 als Einschnürung 47 ausgebildet, die direkt mit einer Endplatte 39 des Piezoantriebs 36 und mit dem Stößel 40 gekoppelt ist und so eine direkte, jedoch seitlich nachgiebige Verbindung zwischen Piezoantrieb 36 und Stößel 40 herstellt.

In Figur 3 ist zusätzlich noch ein seitlicher Tragarm 84 erkennbar, mittels dessen der Aktor 30 befestigt werden kann, etwa an dem Schlitten 24.

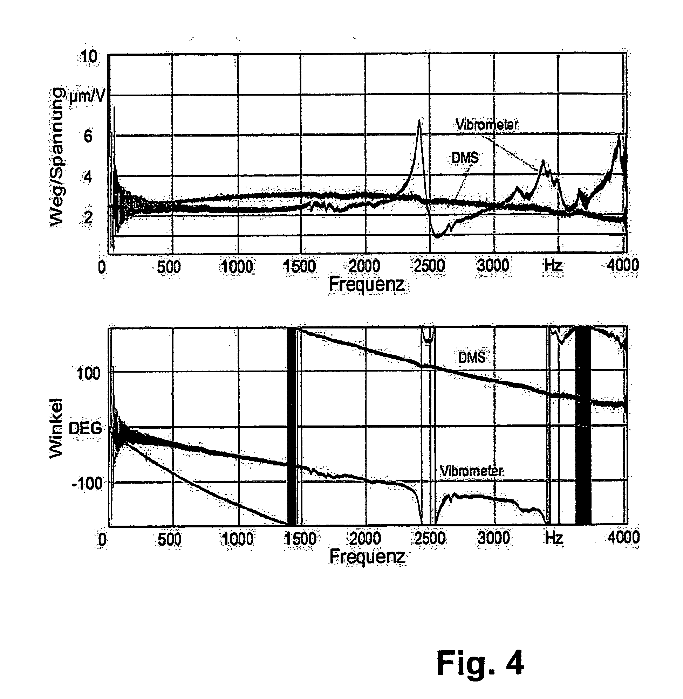

In Figur 4 ist nun der gemessene Frequenzgang und Arbeitsbereich des Aktors gemäß der Figuren 2 und 3 dargestellt. Im vorliegenden Fall wurde als Piezoantrieb 36 ein Piezokristall von 40 µm Maximalzustellung verwendet. Der Piezoantrieb 36 wurde mit einer Amplitude von 1 V in einem Frequenzbereich von 0 bis 4000 Hz angeregt. Der Weg in Abhängigkeit von der Anregungsspannung ist in dem oberen Diagramm von Fig. 4 dargestellt. Das unmittelbar am Werkzeug 32 aufgenommene Vibrometer-Wegsignal zeigt einen sehr konstanten Amplitudengang von ca. 2,5 µm/V von 0 bis ca. 2250 Hz. Die erste Resonanzfrequenz liegt bei ca. 2400 Hz.

Im unteren Teil des Diagramms von Figur 4 ist der Phasengang in Abhängigkeit von der Frequenz dargestellt. Es ergibt sich ein sehr linearer Phasengang von 0 bis 2250 Hz.

Der erfindungsgemäße Aktor ist somit aufgrund seiner sehr guten dynamischen Eigenschaften besonders zur Mikrostrukturierung von Oberflächen geeignet, insbesondere zur spanenden Bearbeitung von harten Werkstoffen, die mit hohen Schnittgeschwindigkeiten bearbeitet werden müssen. Es lassen sich beispielsweise bei einer Strukturamplitude von 5 µm Zustellfrequenzen bis zu etwa 2,25 kHz, realisieren. Bei höheren Zustellamplituden bzw. sehr hohem Materialabtrag ist die maximale Zustellfrequenz etwas geringer. Eine weitere Verbesserung der Dynamik durch Verwendung einer konventionellen Closed-Loop-Regelung (anstelle der verwendeten Open-Loop-Regelung) scheint nicht nötig und wäre auch aufgrund des gemessenen Phasengangs nicht bis knapp unterhalb der Resonanzfrequenz möglich.

Der maximale Stellweg des verwendeten Aktors 30 beträgt etwa 40 µm, womit die Resonanzfrequenz bei etwa 2400 Hz liegt. Für viele Anwendungsfälle wäre jedoch auch ein Piezoantrieb mit einem maximalen Stellweg von 20 µm ausreichend. Hiermit ergäbe sich eine Erhöhung der niedrigsten Resonanzfrequenz auf ca. 3,5 kHz.

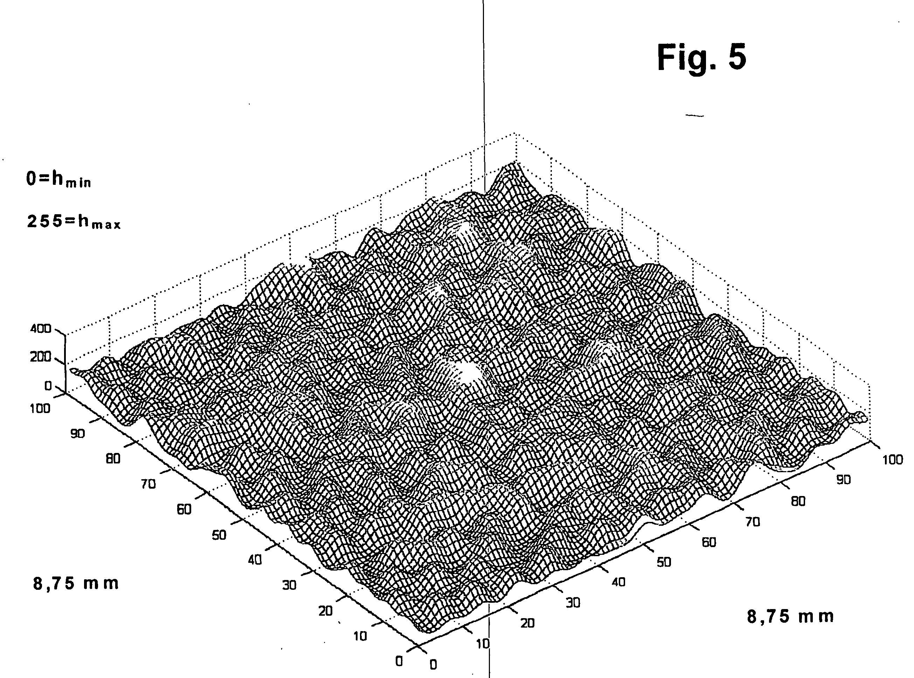

Die Auswahl richtiger Bearbeitungsbedingungen für die Erzeugung einer Mikrolinsenstruktur wird nun anhand der Figuren 5 bis 7 näher erläutert.

Der Aktor 30, der zuvor anhand der Figuren 2 bis 4 näher beschrieben wurde, wurde in Verbindung mit einer Drehmaschine des Typs Index aus dem Jahr 1978 eingesetzt, die eine hochpräzise Spindel mit einem Rundlauffehler in der Größenordnung von 0,4 µm aufwies.

Die Vorrichtung wurde zur Herstellung einer Form für das Heißpressen von Linsen für PES-Scheinwerfer verwendet. Zur Einhaltung bestimmter Lichtverteilungseigenschaften muss hierbei die betreffende Linse in ausgewählten Oberflächenbereichen mit einer Mikrostrukturierung in Form von Mikrolinsen versehen sein. Durch eine derartige mikrostrukturierte oder "gefrostete" Linse werden besondere Lichtverteilungseigenschaften bei Verwendung in dem betreffenden Poly-Ellipsoid-Scheinwerfer erreicht. Die in der Form vorgegebene mikrostrukturierte Oberfläche wird bei der Herstellung der Linse durch Heißpressen auf die Linsenüberfläche übertragen.

In Figur 5 ist nun eine Ausschnittsvergrößerung einer solchen Mikrolinsenstruktur dargestellt. Auf der vertikalen Achse ist hierbei der Grauwert von hₘᵢₙ mit 0 und hₘₐₓ mit 255 dargestellt, was einer Strukturtiefe von 0 bis etwa 10 µm entspricht.

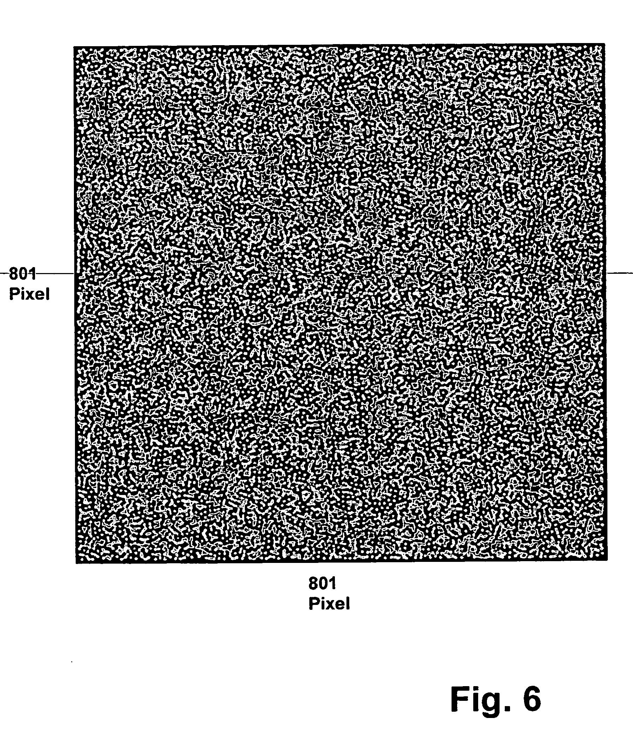

Eine derartige Struktur lässt sich auch durch ein zufällig generiertes Punktmuster gefaltet mit einem binomealen Filter erzeugen. Zur Erzeugung einer solchen Struktur, die in Figur 6 dargestellt ist, können zum Beispiel in einem Bild der Größe 801 Pixel mal 801 Pixel mit einem Zufallsgenerator einzelne Pixel adressiert werden. Falls in einem Ortsabstand von n Pixeln zuvor kein Punkt adressiert wurde (das heißt alle Grauwerte der Nachbarpixel in diesem Umkreis sind 0), dann wird der Grauwert an dem adressierten Pixel zu 1 gesetzt. Der Zufallsgenerator läuft so etliche hunderttausendmal durch. Es entsteht hierdurch ein Bild mit zufällig angeordneten Punkten des Grauwertes 1, wobei jeweils zwei benachbarte Punkte diesen einen Grenzabstand nicht unterschreiten. Dieses Bild wird dann mit dem Binomealfilter zweidimensional gefaltet, eventuell mehrmals. Bildlich gesprochen wird der Binomealfilter im Mittelpunkt jeweils über die Einzelpunkte mit dem Grauwert 1 "übergestülpt". Hierdurch entsteht ein Bild mit den zufällig angeordneten "Bergen" und "Tälern", das sehr gut die Form einer Mikrolinsenstruktur gemäß Fig. 5 simuliert. Da ein derartiger Binomealfilter Tiefpasseigenschaften hat, hat das Gesamtbild auch Tiefpasseigenschaften. Dies kommt der Herstellung durch den verwendeten Aktor 30 sehr entgegen.

Im dargestellten Fall soll die in Figur 5 bzw. Figur 6 gezeigte Mikrostruktur nun mittels des Aktors 30 im Plandrehverfahren in die Oberfläche der Form eingebracht werden. Es versteht sich, dass in diesem Fall eine Umsetzung der in kartesischen Koordinaten gegebenen Soll-Mikrostruktur in ein Polar-Koordinatensystem notwendig ist. Diese in Polarkoordinaten umgesetzte Struktur kann beispielsweise in Form einer Look-Up-Tabelle (LUT) gespeichert werden. Sie gibt den Stellwert G(c,n) für den Aktor in Abhängigkeit vom Drehwinkel (c) und von der Position (n) des Aktors in Radialrichtung an.

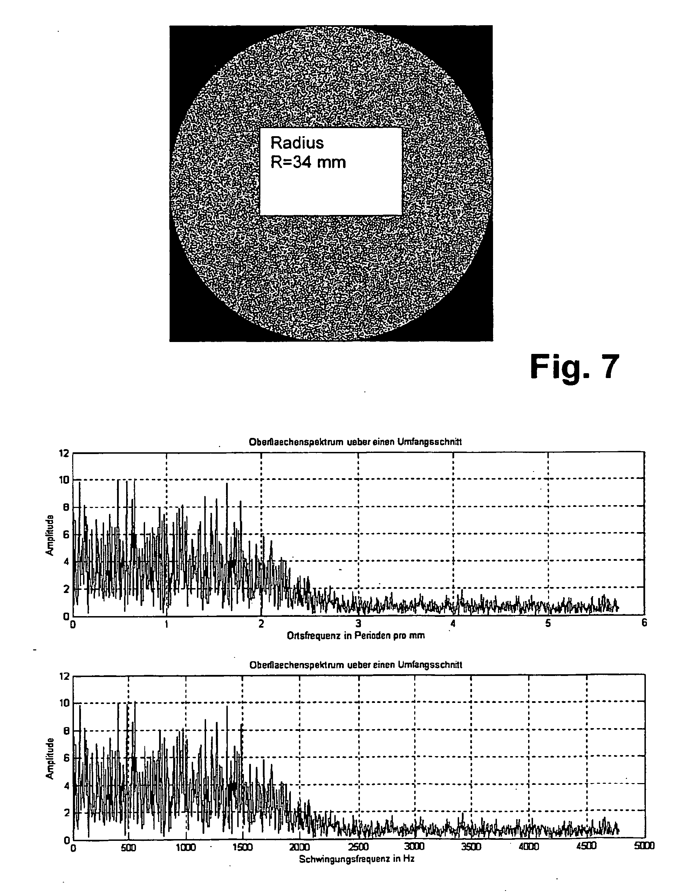

In Figur 7 ist nun eine Ortsfrequenzanalyse dargestellt, die an einer Struktur gemäß Figur 6 erstellt wurde. Hierbei wird die Ortsfrequenz am Außenumfang der zu untersuchenden Struktur (im dargestellten Fall bei einem Radius von 34 mm) mittels einer Fourieranalyse FFT (Fast Fourier Transformation) aufgenommen. In dem dargestellten Oberflächenspektrum über einen Umfangsschnitt zeigt sich, dass der Ortsfrequenzgang von null bis etwa zwei Perioden pro Millimeter relativ konstant ist. Ab etwa 2,8 Strukturen pro Millimeter ist der Ortsfrequenzgang nahe null.

Die untere Abbildung von Figur 7 zeigt nun die Umrechnung des mittels der FFT-Analyse aufgenommenen Ortsfrequenzgangs in einen Schwingungsfrequenzgang unter der Annahme einer Schnittgeschwindigkeit des Werkzeugs von 50 m/min. Damit ergibt sich ein linearer Abfall des Ortsfrequenzgangs auf nahe null ab ca. 2.350 Hz, während bis etwa 1,7 kHz ein sehr linearer Phasengang vorhanden ist.

Erfindungsgemäß wird die Schnittgeschwindigkeit so gewählt, dass bei der ersten Resonanzfrequenz des Aktors, die gemäß Figur 4 bei ca. 2.400 Hz liegt, der Amplitudengang auf null abgefallen ist. Bei der gewählten Struktur kann somit eine Schnittgeschwindigkeit von 50 Meter pro Minute gewählt werden, da hierbei der Ortsfrequenzgang bei ca. 2.350 Hz auf nahe null abgefallen ist. Die mittels des Zufallsgenerators erzeugte Soll-Oberfläche gemäß Figur 6, die der räumlichen Struktur gemäß Figur 5 entspricht, hat somit den Amplitudengang eines tiefpassbegrenzten weißen Rauschens und kann mit dem erfindungsgemäßen Aktor 30 vorteilhaft mit einer Schnittgeschwindigkeit von etwa 50 m/min. erzeugt werden. Damit ist auch die Bearbeitung sehr harter Metallwerkstoffe, wie etwa von Hartmetallen möglich, die eine ausreichend hohe Schnittgeschwindigkeit erfordern, da ansonsten Vibrationen auftreten.

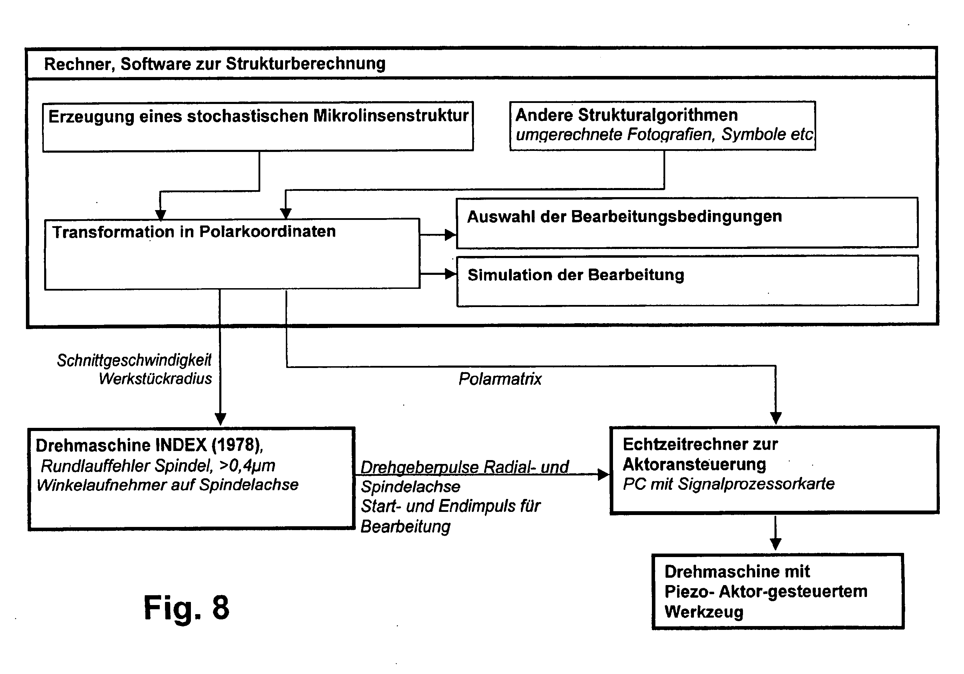

Figur 8 zeigt die grundsätzliche Steuerung der Vorrichtung 10 zur Mikrostrukturierung bei einer Bearbeitung nach der Art des Plandrehens.

Zunächst wird eine stochastische Mikrolinsenstruktur erzeugt (vgl. Figur 5 bzw. 6). Alternativ können natürlich andere Strukturen abgebildet werden, wie etwa umgerechnete Fotografien, Symbole etc.

Diese Strukturen werden sodann in Polarkoordinaten transformiert.

Anhand einer Ortsfrequenzanalyse erfolgt anschließend die Auswahl der Bearbeitungsbedingungen und eine Simulation der Bearbeitung. Mit einer geeigneten Schnittgeschwindigkeit werden sodann von einem Echtzeitrechner zur Aktoransteuerung, bei dem es sich um einen PC mit Signalprozessorkarte handeln kann, die notwendigen Stellsignale für den Aktor und für die Positionierung des Aktors in Radialrichtung erzeugt. Der Echtzeitrechner wertet hierzu die von dem Drehgeber 31 erzeugten Drehgeberimpulse für die Drehachse und die von einem weiteren Drehgeber für die Radialachse erzeugten Impulse aus und erzeugt den Start- und Endimpuls für die Bearbeitung.

Bei der Ortsfrequenzanalyse wird ermittelt, welche Grenzfrequenz die erzeugende Soll-Mikrostruktur aufweist. Ergibt die Ortsfrequenzanalyse eine sehr hohe Grenzfrequenz, so führt dies dazu, dass nur eine sehr geringe Schnittgeschwindigkeit gewählt werden kann, um sicherzustellen, dass die maximale Grenzfrequenz unterhalb der ersten Resonanzfrequenz des Aktors liegt. Dies wäre beispielsweise der Fall, wenn die zu erzeugende Soll-Mikrostruktur scharfe Kanten oder dergleichen aufweist.

In diesem Fall ist es sinnvoll, die zur erzeugende Soll-Mikrostruktur zunächst durch ein Tiefpassfilter oder Bandpassfilter, beispielsweise durch ein Sobel-Filter zu glätten, um so ein tiefpassgefiltertes Signal zu erhalten, das auf vorteilhafte Weise mit dem erfindungsgemäßen Aktorsystem bearbeitet werden kann.

Die zu erzeugende Soll-Mikrostruktur (vgl. Figur 6) sollte quadratisch sein und in Pixeldarstellung ungerade sein, beispielsweise 801 mal 801 Pixel. Aus dieser quadratischen Struktur kann bei der Drehbearbeitung ein Kreis mit einem Durchmesser von 801 Pixel bearbeitet werden. Um auch am äußeren Bildrand im Polarkoordinaten quadratische Pixel zu erhalten, sollte das Bildformat etwa der Auflösung des Drehgebers der Spindelachse dividiert durch PI (die Pixelgenauigkeit) entsprechen. Wird eine Tiefenvorgabe von 1 Byte (= 255 Graustufen) gewählt, so kann beispielsweise ein Drehgeber mit 2.500 Inkrementen verwendet werden. Die 255 Graustufen sollen beispielhaft später in der Tiefenzustellung des Aktors einer Tiefe von 0 bis 10 µm entsprechen.

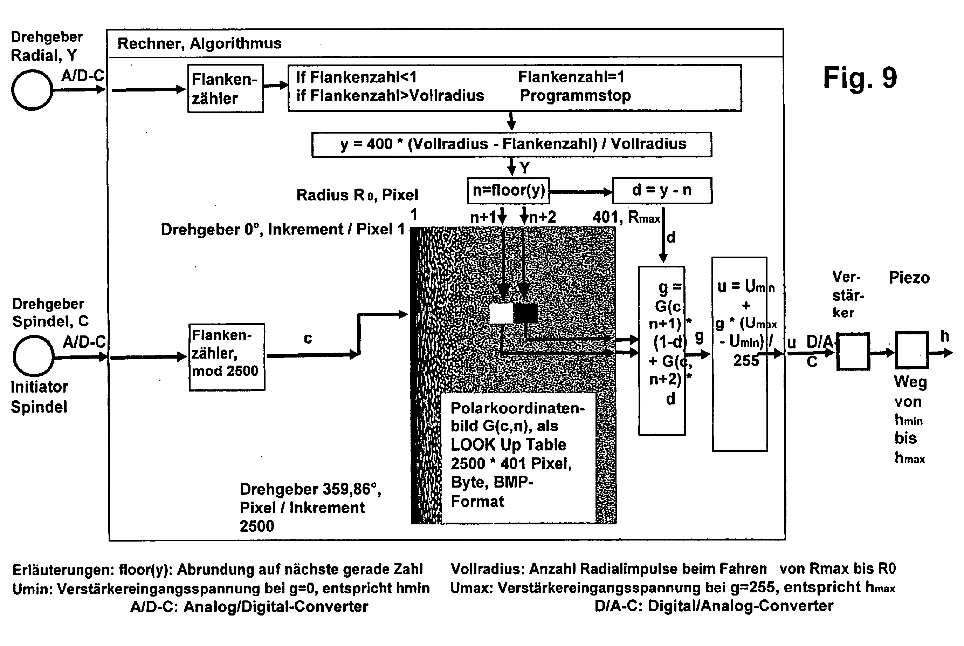

In Figur 9 ist nun der zugehörige Algorithmus für eine derartige Bearbeitung dargestellt.

Die zu erzeugende Soll-Mikrostruktur wird in Polarkoordinaten umgerechnet und als Polarkoordinatenbild G(c, n) als LUT mit 2.500 x 401 Pixel gespeichert, wobei der Stellwert für den Aktor mit der Genauigkeit von 1 Byte angegeben ist. Der Stellwert G kann somit Werte zwischen 0 und 255 annehmen, was einer Auslenkung des Aktors zwischen 0 und maximal 40 µm entsprechen kann oder auch einem kleineren Bereich, beispielsweise von 0 bis 10 µm.

Das Polarkoordinatenbild gemäß Figur 9 wird in der LUT im BMP-Format gespeichert.

Die Winkelposition der Spindel 12 wird gemäß Figur 9 mittels des Drehgebers Spindel C erfasst und ausgehend von einem Anfangswert "Initiator Spindel" nach Umsetzung in einen Digitalwert über den Flankenzähler erfasst und als "c-Wert" verarbeitet.

Auch die Radialposition des Aktors wird über einen Drehgeber Y erfasst und nach Umsetzung in einen Digitalwert über einen Flankenzähler verarbeitet.

Der Piezoantrieb wird über einen Echtzeitrechner mit den Stellwerten für die Zustellung in z-Richtung (Weg von hₘᵢₙ bis hₘₐₓ) angesteuert. Der Verstärker erhält seine Eingangswerte aus der LUT und den von den Drehgebern für die Winkelposition und Radialposition erhaltenen Werte über einen Digital/Analog-Wandler nach einem geeigneten Algorithmus.

Die Verstärkereingangsspannung Uₘᵢₙ bei g = 0 entspricht hₘᵢₙ, während die Verstärkereingangsspannung Uₘₐₓ bei g = 255 dem maximalen Stellwert hₘₐₓ entspricht. "Vollradius" bedeutet die Anzahl der Radialimpulse beim Fahren von Rₘₐₓ bis R₀ (also vom Außenradius bis zur Mitte). In Figur 9 bedeutet "floor(y)" eine Abrundung auf die nächste gerade Zahl.

Mit dem in Figur 9 dargestellten Algorithmus wird der Verstärker über den Digital/Analog-Wandler ausgehend von den Werten aus der LUT und von den Werten des Drehgebers C für die Spindel und des radialen Drehgebers Y für die Radialposition gesteuert.

Dabei verwendet der Algorithmus einer Interpolation für zwei in Radialrichtung unmittelbar nebeneinander liegende Pixel, um die Verstärkereingangsspannung bei der Zustellung des Aktors um ein Pixel in Radialrichtung zu glätten. Wie im ersten Kästchen rechts neben dem Polarkoordinatenbild dargestellt, interpoliert der Algorithmus g = G(c, n + 1) * (1 - d) + G(c, n +2) * d. Daraus ergibt sich dann der digitale Wert u für die Verstärkereingangsspannung nach u = Uₘᵢₙ + g * (Uₘₐₓ - Uₘᵢₙ)/255. Dieser Wert wird über den Digital/Analog-Wandler in einen Analogwert zur Ansteuerung des Verstärkers umgesetzt.

Es findet also eine lineare Interpolation der Stellwerte bei in Radialrichtung nebeneinanderliegenden Pixeln statt, während für den Drehwinkel auf eine Interpolation verzichtet wird. Auf diese Weise werden sonst erkennbare "Riefen" in Drehrichtung vermieden.

Für den Stellwert bei konstanter Radialposition ist keine Interpolation erforderlich, da das mechanische System des Aktors eine ausreichend hohe Trägheit aufweist, um in Umfangsrichtung eine Glättung zu erzielen.

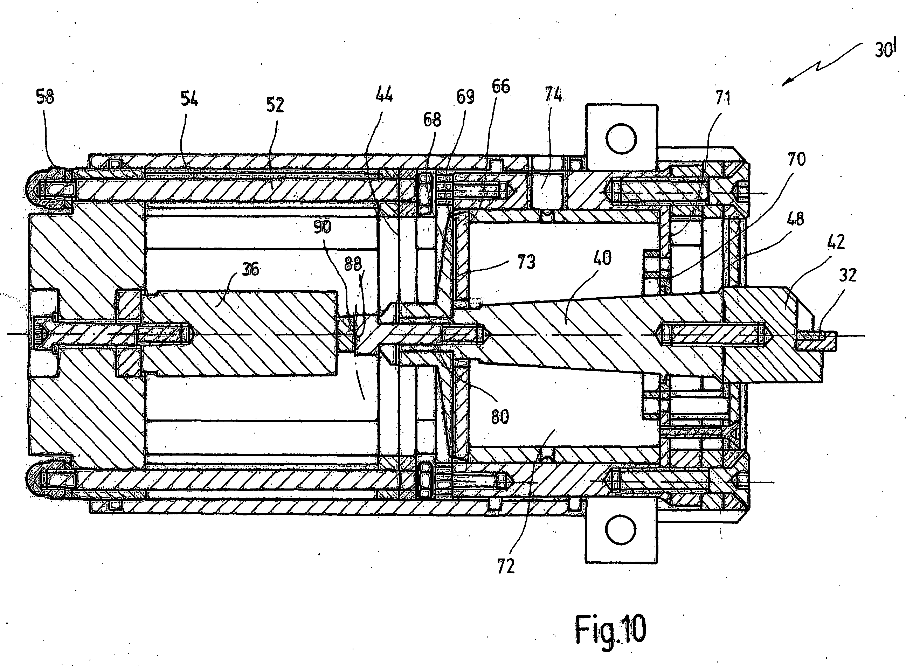

In Figur 10 ist ein gegenüber der Ausführung gemäß Figur 2 leicht abgewandelte Ausführung eines erfindungsgemäßen Aktors in Längsschnitt dargestellt und insgesamt mit der Ziffer 30' bezeichnet. Dabei werden für entsprechende Teile entsprechende Bezugsziffern verwendet.

Der Aktor 30' entspricht in seinem Aufbau weitgehend dem zuvor an Hand von Figur 2 beschriebenem Aktor 30. Im Unterschied zu der Ausführung gemäß Fig. 2 wurde der Werkzeughalter 42 nunmehr so angeordnet, dass das Werkzeug 32 genau mittig ausgerichtet ist. Dadurch lassen sich zur Axialrichtung senkrechte Kraftkomponenten die bei einer außermittigen Anordnung gemäß Figur 2 auftreten, vermeiden. Auf diese Weise wird das Schnittkraftrauschen weiter vermindert.

Ferner ist die Zentrierung zwischen dem Stößel 30' und dem Piezoantrieb 36 mit einer balligen Oberfläche 88 an der Schraube 80 und einer ebenen Gegenfläche 90 am Piezoantrieb 36 ausgebildet.

Schließlich ist zusätzlich zwischen der Sinterplatte 66 und der Membran 68 bzw. der Gegenmembran 69 ein schmaler Spalt 73 einer Breite zwischen etwa 0,1 und 1 Millimeter, vorzugsweise zwischen 0,1 und 0,5 Millimeter ausgebildet, der mit einem Dämpfungsmedium gefüllt ist. Hierbei kann es sich beispielsweise um Luft, Fett oder Öl handeln.

Auch hierdurch wird das Schnittkraftrauschen weiter reduziert.

## Patentansprüche

1. Vorrichtung zur Erzeugung von Mikrostrukturen, mit einer um ihre Längsachse (25) rotierend antreibbaren Spindel (12), an der eine Aufnahme zum Einspannen eines Werkstückes (16) vorgesehen ist, mit einem Aktor (30), der einen schnellen Antrieb (36) zur Erzeugung einer schnellen Bewegung eines Werkzeugs (32) in einer zur Werkstückoberfläche im Wesentlichen senkrechten Richtung aufweist, wobei der Aktor (30) mittels eines weiteren Antriebes (24) zur Erzeugung eines linearen Vorschubes in einer ersten Richtung (x) entlang einer zu bearbeitenden Werkstückoberfläche positionierbar ist, wobei der schnelle Antrieb (36) mit dem Werkzeug (32) über eine Führungseinrichtung (38) gekoppelt ist, die eine Zustellung des Werkzeugs (32) in Axialrichtung des schnellen Antriebs (36) entgegen einer Rückstellkraft erlaubt und in einer Ebene senkrecht dazu eine hohe Steifigkeit aufweist, wobei die Führungseinrichtung (38) einen Stößel (40) aufweist, der an ersten und zweiten Federelementen (44, 48) beweglich gehalten ist, wobei die Federelemente (44, 48) in Radialrichtung des Stößels (40) weitgehend unnachgiebig sind, jedoch senkrecht dazu in Richtung der Stößelachse (41) eine Auslenkung gegen die Federkraft der Federelemente (44, 48) erlauben, wobei das Werkzeug (32) an einem ersten Ende des Stößels (40) eingespannt ist, und wobei der Stößel (40) an seinem dem Werkzeug gegenüber liegenden Ende gegen den schnellen Antrieb (36) vorgespannt ist, **dadurch gekennzeichnet, dass** der Stößel (40) durch einen Fluiddruck gegen den schnellen Antrieb vorgespannt ist.

2. Vorrichtung nach Anspruch 1, **dadurch gekennzeichnet, dass** der Stößel (40) auf einer Werkzeugseite in einem Gehäuse (64) gehalten ist, und dass der Stößel (40) mit dem Gehäuse (64) einen druckdicht abgeschlossenen Raum (72) bildet, der mit einem Fluiddruck beaufschlagbar ist, wobei der Raum (72) über eine erste mit dem Stößel (40) verbundene Membran (68) auf einer benachbanten Piezoantriebsseite und eine zweite mit dem Stößel (40) verbundene Membran (70) auf der Werkzeugseite in Axialrichtung nach außen hin abgedichtet ist, wobei die erste Membran (68) eine größere dem Fluiddruck ausgesetzte wirksame Fläche als die zweite Membran (70) aufweist.

3. Vorrichtung nach Anspruch 1 oder 2, **dadurch gekennzeichnet, dass** die Führungseinrichtung (38) in einer Ebene senkrecht zur Zustellrichtung der Führungseinrichtung (38) eine statische Steifigkeit von mindestens 50 N/µm, vorzugsweise von mindestens 100 N/µm aufweist.

4. Vorrichtung nach einem der Ansprüche 1 bis 3, **dadurch gekennzeichnet, dass** die Federelemente (44, 48) als Blattfedern ausgebildet sind, die an ihren beiden längsseitigen Enden an Haltern (45, 46, 49, 50) eingespannt sind und quer dazu beweglich sind.

5. Vorrichtung nach Anspruch 4, **dadurch gekennzeichnet, dass** die Federelemente (44, 48) aus Fühlerlehrenbändern bestehen, die miteinander gekreuzt in Radialrichtung zwischen dem Halter (45, 46, 49, 50) und dem Stößel (40) eingespannt sind.

6. Vorrichtung nach einem der Ansprüche 1 bis 5, **dadurch gekennzeichnet, dass** das Werkzeug (32) an einem ersten Ende des Stößels (40) eingespannt ist, und dass der Stößel (40) an seinem dem Werkzeug (32) gegenüberliegenden zweiten Ende gegen den schnellen Antrieb (36) vorgespannt ist.

7. Vorrichtung nach einem der Ansprüche 2 bis 6, **dadurch gekennzeichnet, dass** wenigstens eine der Membranen (68, 70) aus Aluminium besteht.

8. Vorrichtung nach einem der vorhergehenden Ansprüche, **dadurch gekennzeichnet, dass** der Antrieb (24) einen Vorschub in einer Richtung (x) senkrecht zur Spindelachse (25) erlaubt und dass der Aktor (30) eine Bewegung des Werkzeugs (32) in Richtung(z) der Spindelachse (25) erlaubt.

9. Vorrichtung nach einem der Ansprüche 1 bis 8, **dadurch gekennzeichnet, dass** der Antrieb (20) einen Vorschub in einer zur Spindelachse (25) parallelen Richtung (z) erlaubt, und dass der Aktor (30) eine Bewegung des Werkzeugs (32) senkrecht dazu (x, y) erlaubt.

10. Aktor (30) zur Bewegung eines Werkzeugs an einer Drehmaschine (10) zur Erzeugung einer mikrostrukturierten Oberfläche mittels eines schnellen Antriebs, insbesondere eines Piezoantriebs (36), wobei der schnelle Antrieb (36) mit dem Werkzeug (32) über eine Führungseinrichtung (38) mit einem gegen eine Rückstellkraft vorgespannten Stößel (40) gekoppelt ist, die eine Zustellung des Werkzeugs (32) in Axialrichtung des schnellen Antriebs (36) entgegen der Rückstellkraft erlaubt und in einer Ebene senkrecht dazu eine hohe Steifigkeit aufweist, wobei der Stößel (40) an ersten und zweiten Federelementen (44, 48) beweglich gehalten ist, wobei die Federelemente (44, 48) in Radialrichtung des Stößels (40) weitgehend unnachgiebig sind, jedoch senkrecht dazu in Richtung der Stößelachse (41) eine Auslenkung gegen die Federkraft der Federelemente erlauben, wobei das Werkzeug (32) an einem ersten Ende des Stößels (40) eingespannt ist, und wobei der Stößel (40) an seinem dem Werkzeug gegenüber liegenden Ende gegen den schnellen Antrieb (36) vorgespannt ist, **dadurch gekennzeichnet, dass** der Stößel (40) durch einen Fluiddruck vorgespannt ist.

## Claims

1. A device for producing microstructures with a spindle (12), which is adapted to be driven for rotation about its longitudinal axis (25) and which is provided with a fixture for clamping a workpiece (16), having an actuator (30) provided with a fast drive (36) adapted to produce fast movement of a tool (32) in a direction substantially perpendicular to a workpiece surface, which actuator (30) can be positioned along a workpiece surface to be worked with the aid of an additional drive (24) adapted to produce a linear feed motion in a first direction (x), wherein the fast drive (36) is coupled with the tool (32) via guide means (38) that allow feeding of the tool (32) in axial direction of the fast drive (36), against the action of a restoring force, and that is highly rigid in a plane perpendicular to that direction, wherein the guide means (38) comprises a ram (40) movably supported on first and second spring elements (44, 48), the spring elements (44, 48) being largely unyielding in the radial direction of the ram (40), while allowing deflection in the direction of the ram axis (41) against the spring force of the spring elements (44, 48), wherein the tool (32) is clamped at a first end of the ram (40) and the ram (40) is biased against the fast drive (36) at an end opposite the tool (32), **characterized in that** the ram (40) is biased by a fluid pressure against the fast drive.

2. The device of claim 1, **characterized in that** the ram (40) at one tool side is held in a housing (64) and that the ram (40) and the housing (64) form a pressure-tight space (72) to which a fluid pressure can be applied, the space (72) being sealed toward the outside, in axial direction, by a first diaphragm (68) connected with the ram (40) on an adjacent piezo side, and by a second diaphragm (70) connected with the ram (40) on the tool side, and the first diaphragm (68) having a larger active surface exposed to the fluid pressure than the second diaphragm (70).

3. The device of claim 1 or claim 2, **characterized in that** the guide means (38) has a static rigidity of at least 50 N/µm, preferably of at least 100 N/µm, in a plane perpendicular to the feed direction of the guide means (38).

4. The device of any of claims 1 to 3, **characterized in that** the spring elements (44, 48) are configured as leaf springs that have their lengthwise ends clamped in holders (45, 46, 49, 50) and can be moved transversely to that direction.

5. The device of claim 4, **characterized in that** the spring elements (44, 48) consist of feeler gauge strips that are clamped in crossed arrangement between the holder (45, 46, 49, 50) and the ram (40) in the radial direction.

6. The device of any of claims 1 to 6, **characterized in that** the tool (32) is clamped at a first end of the ram (40) and that the ram (40) is biased against the fast drive (36) at an end opposite the tool (32).

7. The device of any of claims 2 to 6, **characterized in that** at least one of the diaphragms (68, 70) consists of aluminum.

8. The device of any of the preceding claims, **characterized in that** the drive (24) permits a feed motion in a direction (x) perpendicular to the spindle axis (25), while the actuator (30) permits a movement of the tool (32) in the direction (z) of the spindle axis (25).

9. The device of any of claims 1 to 8, **characterized in that** the drive (20) permits a feed motion in a direction (z) parallel to the spindle axis (25), while the actuator (30) permits a movement of the tool (32) in a direction perpendicular to that direction (x, y).

10. An actuator (30) for moving a workpiece on a turning machine (10) for the purpose of producing a microstructured surface by means of a fast drive, in particular a piezo drive (36), wherein the fast drive (36) is coupled with the tool (32) via guide means (38) by a ram (40) that is biased against a restoring force that allows the tool (32) to be fed in the axial direction of the fast drive (36), against the action of the restoring force, and that exhibits high rigidity in a plane perpendicular to that direction, wherein the ram (40) is moveably supported on first and second spring elements (44, 48), wherein the spring elements (44, 48) are largely unyielding in the radial direction of the ram (40), while allowing deflection in the direction of the ram axis (41) against the spring force of the spring elements (44, 48), wherein the tool (32) is clamped at a first end of the ram (40), and wherein the ram (40) is biased against the fast drive (36) at an end opposite a tool (32), **characterized in that** the ram (40) is biased by a fluid pressure.

## Revendications

1. Dispositif pour la production de microstructures, comportant une broche (12), qui est apte à être entraînée en rotation autour de son axe longitudinal (25) et sur laquelle est prévu un logement pour le serrage d'une pièce à usiner (16), comportant un actionneur (30) qui est muni d'un système d'entraînement (36) rapide destiné à appliquer un mouvement rapide à un outil (32) dans une direction sensiblement perpendiculaire à la surface de la pièce à usiner, l'actionneur (30) pouvant être positionné au moyen d'un autre système d'entraînement (24) destiné à générer un mouvement d'avance linéaire dans une première direction (x) le long d'une surface de la pièce à usiner, le système d'entraînement (36) rapide étant couplé à l'outil (32) par l'intermédiaire d'un dispositif de guidage (38) qui permet une approche de l'outil (32) dans la direction axiale du système d'entraînement (36) rapide à l'encontre d'une force de rappel et, dans un plan perpendiculaire à celle-ci, possède une grande rigidité, le dispositif de guidage (38) comportant un poussoir (40) qui est maintenu de manière mobile sur des premiers et des deuxièmes éléments à ressort (44, 48), lesdits éléments à ressort (44, 48) étant en grande partie non flexibles dans la direction radiale du poussoir (40), mais permettant, perpendiculairement à celle-ci dans la direction de l'axe du poussoir (41), une déviation à l'encontre de la force élastique des éléments à ressort (44, 48), l'outil (32) étant monté sur une première extrémité du poussoir (40) et ledit poussoir (40), au niveau de sa deuxième extrémité opposée à l'outil, étant précontraint contre le système d'entraînement (36) rapide, **caractérisé en ce que** le poussoir (40) est précontraint contre le système d'entraînement rapide sous l'effet de la pression d'un fluide.

2. Dispositif selon la revendication 1, **caractérisé en ce que** le poussoir (40), sur un côté de l'outil, est maintenu dans un boîtier (64), et **en ce que** le poussoir (40) forme avec le boîtier (64) un espace (72), qui est fermé de manière étanche à la pression et qui peut être sollicité par la pression d'un fluide, ledit espace (72) étant rendu étanche dans la direction axiale vers l'extérieur par l'intermédiaire d'une première membrane (68), reliée au poussoir (40), sur un côté du piézomoteur adjacent, et par une deuxième membrane (70), reliée au poussoir (40), sur le côté de l'outil, la première membrane (68) ayant une surface active, exposée à la pression du fluide, plus grande que celle de la deuxième membrane (70).

3. Dispositif selon la revendication 1 ou 2, **caractérisé en ce que** le dispositif de guidage (38) possède, dans un plan perpendiculaire à la direction d'approche du dispositif de guidage (38), une rigidité statique de 50 N/µm au moins, de préférence de 100 N/µm au moins.

4. Dispositif selon l'une des revendications 1 à 3, **caractérisé en ce que** les éléments à ressort (44, 48) sont réalisés sous la forme de ressorts à lame, dont les deux extrémités longitudinales sont bloquées dans des fixations (45, 46, 49, 50) et sont mobiles transversalement à celles-ci.

5. Dispositif selon la revendication 4, **caractérisé en ce que** les éléments à ressort (44, 48) sont réalisés dans des bandes formant des jauges de palpation qui, croisées entre elles, sont bloquées dans la direction radiale entre la fixation (45, 46, 49, 50) et le poussoir (40).

6. Dispositif selon l'une des revendications 1 à 5, **caractérisé en ce que** l'outil (32) est monté sur une première extrémité du poussoir (40), et **en ce que** le poussoir (40), au niveau de sa deuxième extrémité opposée à l'outil (32), est précontraint contre le système d'entraînement (36) rapide.

7. Dispositif selon l'une des revendications 2 à 6, **caractérisé en ce qu'**au moins une des membranes (68, 70) est réalisée en aluminium.

8. Dispositif selon l'une des revendications précédentes, **caractérisé en ce que** le système d'entraînement (24) permet un mouvement d'avance dans une direction (x) perpendiculaire à l'axe (25) de la broche, et **en ce que** l'actionneur (30) permet un mouvement de l'outil (32) dans la direction (z) de l'axe (25) de la broche.

9. Dispositif selon l'une des revendications 1 à 8, **caractérisé en ce que** le système d'entraînement (20) permet un mouvement d'avance dans une direction (z) parallèle à l'axe (25) de la broche, et **en ce que** l'actionneur (30) permet un mouvement de l'outil (32) perpendiculairement à celle-ci (x, y).

10. Actionneur (30) destiné à déplacer un outil sur un tour (10) pour générer une surface microstructurée au moyen d'un système d'entraînement rapide, en particulier un piézomoteur (36), le système d'entraînement (36) rapide étant couplé à l'outil (32) par l'intermédiaire d'un dispositif de guidage (38), qui comporte un poussoir (40) précontraint à l'encontre d'une force de rappel, qui permet une approche de l'outil (32) dans la direction axiale du système d'entraînement (36) rapide à l'encontre de la force de rappel et, dans un plan perpendiculaire à celle-ci, possède une grande rigidité, le poussoir (40) étant maintenu de manière mobile sur des premiers et des deuxièmes éléments à ressort (44, 48), lesdits éléments à ressort (44, 48) étant en grande partie non flexibles dans la direction radiale du poussoir (40), mais permettant, perpendiculairement à celle-ci dans la direction de l'axe du poussoir (41), une déviation à l'encontre de la force élastique des éléments à ressort, l'outil (32) étant monté sur une première extrémité du poussoir (40) et ledit poussoir (40), au niveau de son extrémité opposée à l'outil, étant précontraint contre le système d'entraînement (36) rapide, **caractérisé en ce que** le poussoir (40) est précontraint sous l'effet de la pression d'un fluide.
